# EUROPÄISCHE PATENTSCHRIFT

(11) **EP 0 899 532 B1**
(45) Veröffentlichungstag und Bekanntmachung des Hinweises auf die Patenterteilung: **06.11.2002**
(21) Anmeldenummer: 97114840.8
(22) Anmeldetag: 27.08.1997
(51) Int. Cl.: F28F 25/08, F28C 1/14

(54) **Einbauelement für Kühlwerke**
Packing element for cooling towers
Elément de garnissage pour tours de refroidissement

(43) Veröffentlichungstag der Anmeldung: 03.03.1999
(73) Patentinhaber: Balcke-Dürr GmbH, 40882 Ratingen (DE)
(72) Erfinder: Menzel, Knut, 45289 Essen (DE); Werner, Alt, 44797 Bochum (DE); Clark, Richard, Buckinghamshire HP14 4EQ (GB); Kujas-Schröter, Ariane, 40764 Langenfeld (DE)
(74) Vertreter: Stenger, Watzke & Ring Patentanwälte

(56) Entgegenhaltungen:
- EP-A- 0 151 547
- EP-A- 0 508 223
- DE-A- 2 840 317
- FR-A- 2 459 437
- US-A- 5 454 987

## Beschreibung

Die Erfindung betrifft ein Einbauelement für Kühlwerke, dem zu kühlende Flüssigkeit von oben aufgegeben und das im Kreuz- und/oder Gegenstrom mit Kühlgas, vorzugsweise Luft beaufschlagt wird, wobei eine Mehrzahl von zueinander parallelen Kanälen vorgesehen ist, die insgesamt vom Kühlgas durchströmt werden und von denen ein Teil zwecks direktem Stoff- und Wärmeaustausch mit der zu kühlenden Flüssigkeit beaufschlagt und der andere Teil zwecks indirektem Wärmeaustausch ausschließlich mit Kühlgas beaufschlagt wird, wobei die für den indirekten Wärmeaustausch vorgesehenen Kanäle durch vollwandige Rohre gebildet sind.

Derartige Einbauelemente für Kühlwerke sind in der Praxis bekannt. Sie bestehen aus gewellten Folien, die paarweise an ihrem oberen Rand miteinander flüssigkeitsdicht verbunden werden. Auf diese Weise entsteht eine Vielzahl von waagerecht verlaufenden Strömungskanälen, die von Kühlluft durchströmt werden. Da die von oben aufgegebene Flüssigkeit nur in diejenigen Strömungskanäle eintreten kann, die zwischen den paarweise miteinander verbundenen Folien ausgebildet sind, findet nur in etwa der Hälfte der Strömungskanäle ein direkter Stoff- und Wärmeaustausch zwischen der zu kühlenden Flüssigkeit und der Kühlluft statt. In den anderen, durch die paarweise miteinander verbundenen Folien gebildeten Strömungskanälen strömt ausschließlich Kühlluft, die somit in indirektem Wärmeaustausch der zu kühlenden Flüssigkeit Wärme entzieht.

Durch die Bildung der einerseits am direkten, das heißt nassen, und andererseits am indirekten, das heißt trockenen Wärmeaustausch teilnehmenden Kanäle durch gewellte, paarweise am oberen Rand miteinander verbundene Folien läßt sich das Verhältnis von direkter zu indirekter Wärmeübertragung nur in engen Grenzen beeinflussen, weil im wesentlichen stets die Hälfte der Kanäle ausschließlich von Kühlluft und die andere Hälfte von Flüssigkeit und Kühlluft beaufschlagt wird.

Auch aus der EP-A-0 151 547 war ein Einbauelement für Kühlwerke der voranstehend beschriebenen Art bekannt, wobei ein Lattenwerk ohne gezielte Ausbildung von Kanälen für den direkten Stoff- und Wärmeaustausch zwischen der zu kühlenden Flüssigkeit und der Kühlluft vorgesehen ist.

Da mit den bekannten Einbauelementen trotz Aufgabe der gesamten Flüssigkeitsmenge im offenen Kreislauf nur ein Teil der Wärmeübertragung im direkten Stoff- und Wärmeaustausch zwischen Flüssigkeit und Kühlluft und der restliche Teil im indirekten Wärmeaustausch erfolgt, wird auch bei ungünstigen Witterungsbedingungen das Entstehen eines Schwadens verhindert, da die aus den ausschließlich von Kühlluft durchströmten Kanälen austretende trockene Warmluft sich mit der feuchten Warmluft aus den anderen Strömungskanälen vermischt und den Sättigungsgrad der aus dem Kühlwerk austretenden Warmluft unter die Sättigungsgrenze drückt.

Der Erfindung liegt die **Aufgabe** zugrunde, die bekannten Einbauelemente der voranstehend beschriebenen Art mit dem Ziel einer preiswerten Konstruktion und einer großen Variabilität des Verhältnisses zwischen Naß- und Trockenkühlung weiterzuentwicketn und gleichzeitig eine hohe Betriebssicherheit gegen Schwadenbildung zu erzielen.

Die **Lösung** dieser Aufgabenstellung durch die Erfindung ist dadurch gekennzeichnet, daß die für den direkten Stoff- und Wärmeaustausch vorgesehenen Kanäle durch Gitterrohre gebildet sind, die parallel zu den vollwandigen Rohren angeordnet sind.

Die Verwendung von Gitterrohren als Strömungskanäle für den direkten Stoff- und Wärmeaustausch hat den Vorteil, daß die von oben auf die Gitterrohre aufgegebene Flüssigkeit in einzelne Tropfen aufgeteilt wird, womit eine Oberflächenvergrößerung und die Bildung von Turbulenzen verbunden ist, so daß die Intensität des Stoff- und Wärmeaustauschs verbessert wird und sich ein größerer Wirkungsgrad ergibt. Die durch die vollwandigen Rohre gebildeten Kanäle für den indirekten Wärmeaustausch verhindern infolge der Vermischung der feuchten und trockenen Warmluft das Entstehen eines Schwadens, weil die Zumischung von untersättigtem, aufgewärmten Kühlgas zum gesättigten Kühlgas den Feuchtigkeitsgehalt des austretenden Gases insgesamt unter der Sättigungsgrenze hält. Da die Anzahl, der Strömungsquerschnitt und die konkrete Form sowohl der Gitterrohre als auch der vollwandigen Rohre vielfältig variiert werden können, kann das jeweilige Einbauelement der Erfindung auf einfache Weise an die jeweiligen Verhältnisse des Kühlwerkes angepaßt werden. Bei einfacher und preiswerter Konstruktion und hoher Variabilität des Verhältnisses zwischen Naß- und Trockenkühlung läßt sich das erfindungsgemäße Einbauelement demzufolge auf sehr einfache Weise sowohl den jeweiligen Verhältnissen anpassen als auch nachträglich durch Hinzunahme oder Wegnahme vollwandiger Rohre verändern. Die Bildung des für Kühlwerke bestimmten Einbauelements nach der Erfindung durch Gitterrohre und vollwandige Rohre schafft somit eine große Betriebssicherheit hinsichtlich der Vermeidung von Schwaden.

Aus der EP-A-0 508 223 war zwar ein Einbauelement für Kühlwerke bekannt, das aus Gitterrohren gebildet wird. Diese bekannte Konstruktion ist jedoch ausschließlich für Naßkühlung bestimmt und löst weder die der Erfindung zugrunde liegende Aufgabenstellung, noch werden die voranstehend dargelegten Vorteile des erfindungsgemäßen Einbauelements erzielt.

Die vollwandigen Rohre können erfindungsgemäß zwischen den Gitterrohren und/oder innerhalb der Gitterrohre angeordnet sein, wobei die Möglichkeit besteht, zur Veränderung des Verhältnisses von direkter zu indirekter Wärmeübertragung auch nachträglich vollwandige Rohre in die Gitterrohre einzuschieben oder zu entnehmen, und zwar vorzugsweise im oberen Bereich des Rieseleinbaus, da dort die Temperatur der zu kühlenden Flüssigkeit höher ist und damit das Kühlgas beim indirekten Wärmeaustausch stärker aufgewärmt wird.

Die vollwandigen Rohre können gemäß weiteren Merkmalen der Erfindung dieselben oder kleinere Querschnittsabmessungen als die Gitterrohre haben, so daß die Möglichkeit besteht, vollwandige Rohre anstelle von Gitterrohren im Rieseleinbauelement einzusetzen oder in den Zwischenräumen zwischen den Gitterrohren. Bei Ausbildung der vollwandigen Rohre mit einem kleineren Durchmesser als die Gitterrohre können auch mehrere vollwandige Rohre innerhalb eines Gitterrohres angeordnet werden, gegebenenfalls unter Verwendung von Abstandshaltem. Die Gitterrohre und die vollwandigen Rohre können einen kreisförmigen, ovalen oder polygonalen Querschnitt haben, und zwar auch voneinander abweichende Querschnitte.

Um die Wärmeaustauschleistung der glattwandigen Rohre zu vergrößern, wird mit der Erfindung weiterhin vorgeschlagen, die glattwandigen Rohre auf der Innen- und/oder Außenseite mit die Rohroberfläche vergrößernden Rippen oder Noppen zu versehen.

Um das Eintreten von zu kühlender Flüssigkeit in das Innere der vollwandigen Rohre und damit eine Beeinträchtigung des trockenen Wärmeaustausches zu vermeiden, wird mit der Erfindung vorgeschlagen, die vollwandigen Rohre länger als die Gitterrohre auszubilden, so daß diese mindestens mit einem Ende die Gitterrohre überragen. Weiterhin können die vollwandigen Rohre an ihrem einströmseitigen Ende mit einer trichterförmigen Erweiterung und/oder einer Abschrägung versehen sein. Auch diese Maßnahmen dienen der Verbesserung des indirekten Wärmeaustauschs zwischen zu kühlender Flüssigkeit und dem Kühlgas bei gleichzeitiger Minimierung von Gaseintrittsverlusten. Die die Gitterrohre überragenden Enden der vollwandigen Rohre können zugleich gemäß der Erfindung als Auflage oder Abstützung für das Einbauelement dienen.

Eine weitere wirkungsvolle Maßnahme zur Verhinderung des Eintrittes von Flüssigkeit in das Innere der vollwandigen Rohre besteht gemäß der Erfindung darin, das die Gitterrohre überragende Ende der glattwandigen Rohre mit einem radial von der Rohrmantelfläche abstehenden Kragen zu versehen.

Gemäß einem weiteren Merkmal der Erfindung können die Gitterrohre und die vollwandigen Rohre wahlweise etwa waagerecht liegend oder etwa senkrecht stehend angeordnet sein, und zwar in Abhängigkeit von der jeweiligen Ausgestaltung des Kühlwerkes.

Sofern das erfindungsgemäße Einbauelement mit etwa senkrecht stehend angeordneten Rohren ausgeführt und mit einer oberhalb der Rohre angeordneten Flüssigkeitsverteileinrichtung versehen wird, wobei die vollwandigen Rohre mit ihrem oben liegenden Austrittsende die Flüssigkeitsverteileinrichtung überragen und mit ihrem unten liegenden Eintrittsende bis in den Bereich des seitlichen Kühlgaseintrittes herausragen, wird gemäß einer erfindungsgemäßen Weiterbildung vorgeschlagen, daß unterhalb der Gitterrohre und oberhalb der unteren Enden der vollwandigen Rohre Sammelrinnen oder Abtropfbleche zum Auffangen der Flüssigkeit angeordnet werden. Hierdurch wird auch im Eintrittsbereich des Kühlgases eine gezielte Trennung zwischen Gas und Flüssigkeit erzielt.

Auf der Zeichnung sind mehrere Ausführungsbeispiele des erfindungsgemäßen Einbauelements für Kühlwerke dargestellt, und zwar zeigt:
- Fig. 1: eine perspektivische Darstellung eines ersten Ausführungsbeispiels,
- Fig. 2: eine Abwandlung der ersten Ausführungsform,
- Fig. 3: eine weitere Abwandlung der ersten Ausführungsform,
- Fig. 4: ein zweites Ausführungsbeispiel, ebenfalls in perspektivischer Darstellung,
- Fig. 5: eine perspektivische Darstellung eines dritten Ausführungsbeispiels,
- Fig. 6: eine Stirnansicht einer Abwandlung der Ausführung nach Fig. 5,
- Fig. 7: eine weitere Abwandlung der Ausführung nach Fig. 5,
- Fig. 8: ein viertes Ausführungsbeispiel in einer perspektivischen Ansicht,
- Fig. 9: einen senkrechten Schnitt durch einen Kühlturm mit einem fünften Ausführungsbeispiel der Einbauelemente und
- Fig. 10: eine Abwandlung der in einem Kühlturm gemäß Fig. 9 angeordneten Einbauelemente.

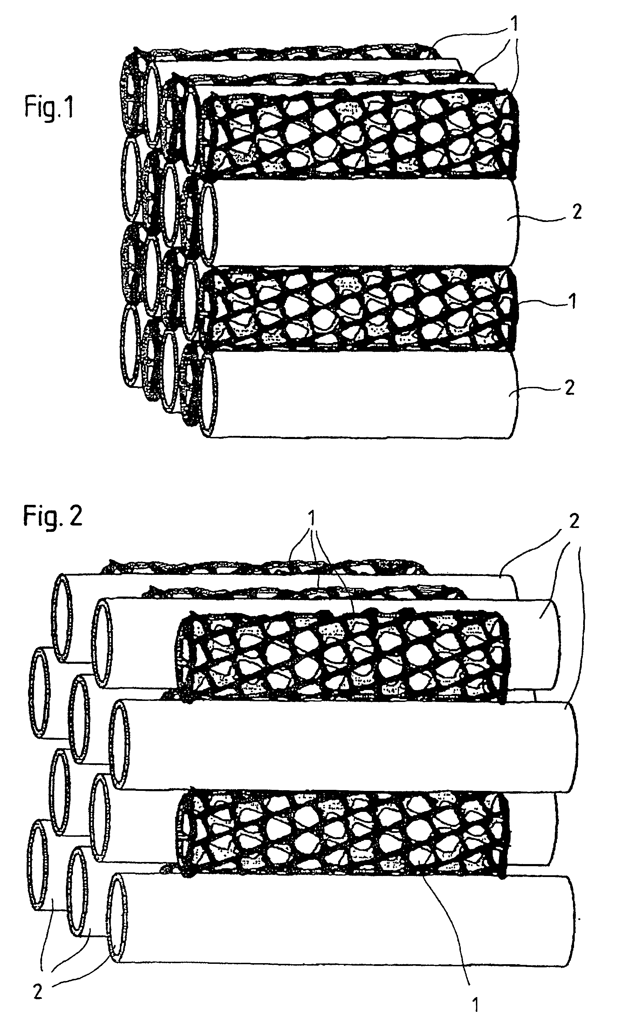

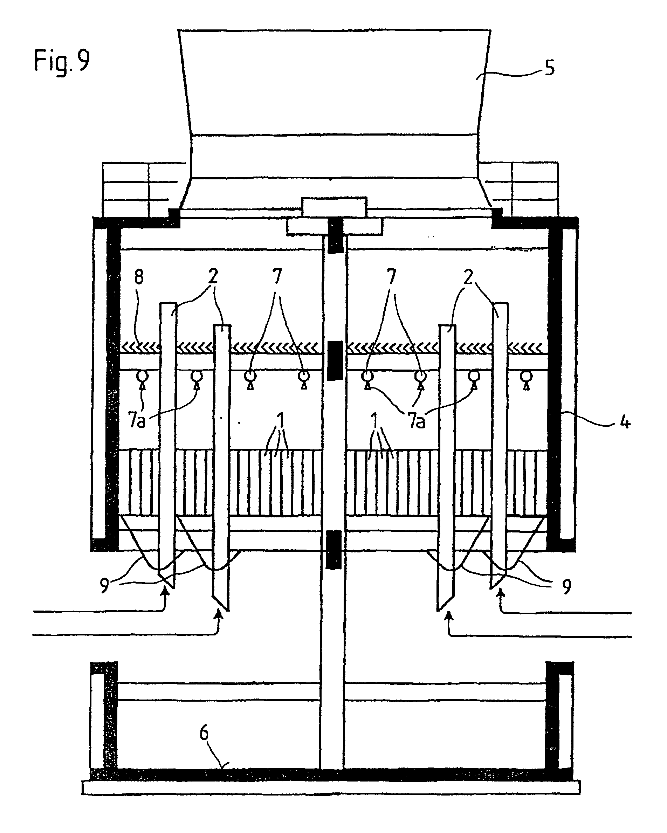

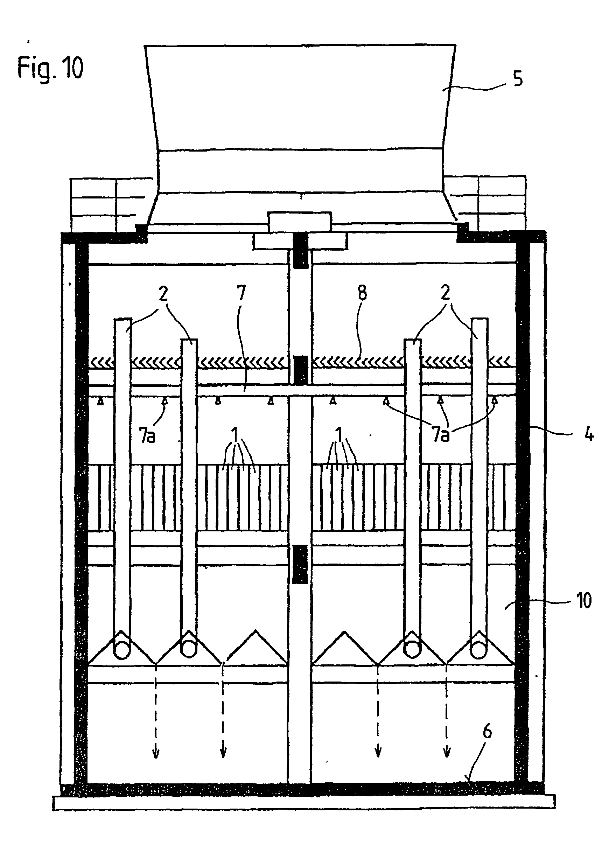

Bei allen Ausführungsbeispielen besteht das für Kühlwerke bestimmte Einbauelement aus Gitterrohren 1 und vollwandigen Rohren 2, die entweder gemäß den Ausführungsbeispielen nach den Fig. 1 bis 8 im wesentlichen waagerecht oder gemäß den Ausführungsbeispielen nach den Fig. 9 und 10 im wesentlichen senkrecht angeordnet sind und stets von oben mit zu kühlender Flüssigkeit beaufschlagt werden. Diese Flüssigkeit wird im Kreuz- und/oder Gegenstrom durch Kühlgas gekühlt. Die Ausführungsbeispiele nach den Fig. 1 bis 8 zeigen eine Kreuzstromkühlung, die Ausführungsbeispiele nach den Fig. 9 und 10 eine Kühlung im Gegenstrom.

Beim ersten Ausführungsbeispiel nach Fig. 1 haben die Gitterrohre 1 und die vollwandigen Rohre 2 einen kreisförmigen Querschnitt mit demselben Durchmesser. Jeweils die Hälfte der Rohre des Einbauelements besteht aus Gitterrohren 1 bzw. vollwandigen Rohren 2, die abwechselnd übereinander und abwechselnd nebeneinander parallel zueinander sowie waagerecht liegend angeordnet sind.

Die zu kühlende Flüssigkeit, beispielsweise das aus einem Kondensator kommende warme Wasser eines Dampfkraftwerkes, wird dem Einbauelement von oben aufgegeben. Es benetzt demzufolge die außenliegende Mantelfläche der vollwandigen Rohre 2 und die gesamte Oberfläche der Gitterrrohre 1, wobei es im Bereich der Gitterrohre 1 in einzelne Strähnen und Tropfen aufgeteilt wird, wogegen es auf der Mantelfläche der vollwandigen Rohre 2 in einem Film herabrieselt. Das aus den Gitterrohren 1 und vollwandigen Rohren 2 bestehende Einbauelement wird in waagerechter Richtung, das heißt im Kreuzstrom zu der zu kühlenden Flüssigkeit mit Kühlgas beaufschlagt, vorzugsweise mit Luft.

Hierdurch findet im Bereich der Gitterrohre 1 ein unmittelbarer Stoff- und Wärmeaustausch zwischen der zu kühlenden Flüssigkeit und dem Kühlgas statt. Da das Kühlgas im Inneren der vollwandigen Rohre 2 nicht in einen direkten Kontakt mit der zu kühlenden Flüssigkeit kommt, die jedoch von außen her die vollwandigen Rohre 2 erwärmt, findet im Bereich der vollwandigen Rohre 2 ein indirekter Wärmeaustausch zwischen zu kühlender Flüssigkeit und Kühlgas statt. Während das aus den Gitterrohren 1 austretende Kühlgas feuchtigkeitsbeladen ist, tritt aus den vollwandigen Rohren 2 erwärmtes, aber trockenes Kühlgas aus. Diese warme trockene Kühlgas mischt sich nach dem Austritt aus dem Einbauelement mit dem feuchtigkeitsbeladenen Kühlgas aus den Gitterrohren 1, so daß das Gemisch aus feuchtem und trockenem Kühlgas insgesamt unter der Sättigungsgrenze liegt, womit das Entstehen von Schwaden vermieden wird.

Durch die Anzahl und Abmessungen einerseits der Gitterrohre 1 und andererseits der vollwandigen Rohre 2 jedes Einbauelements kann in Abhängigkeit von den jeweiligen Arbeitsbedingungen das Verhältnis von direktem zu indirektem Wärmeaustausch bestimmt werden. Hierbei ist es nicht erforderlich, daß die Gitterrohre 1 und vollwandigen Rohre 2 einen kreisförmigen Querschnitt haben. Sie können auch einen ovalen oder polygonalen sowie jeden anderen Querschnitt haben.

Um das Eintreten von zu kühlender Flüssigkeit in die vollwandigen Rohre 2 zu vermeiden, können diese gemäß der in Fig. 2 dargestellten ersten Variante des in Fig. 1 dargestellten Ausführungsbeispiels länger als die Gitterrohre 1 sein und mindestens mit einem Ende die Gitterrohre überragen. Die Flüssigkeitsaufgabe erfolgt hierbei ausschließlich im Bereich der Gitterrohre 1, so daß die beiden Enden der vollwandigen Rohre 2 nicht oder nur in geringem Umfang mit zu kühlender Flüssigkeit beaufschlagt werden, womit ein Eintreten von Flüssigkeit in die vollwandigen Rohre 2 verhindert wird.

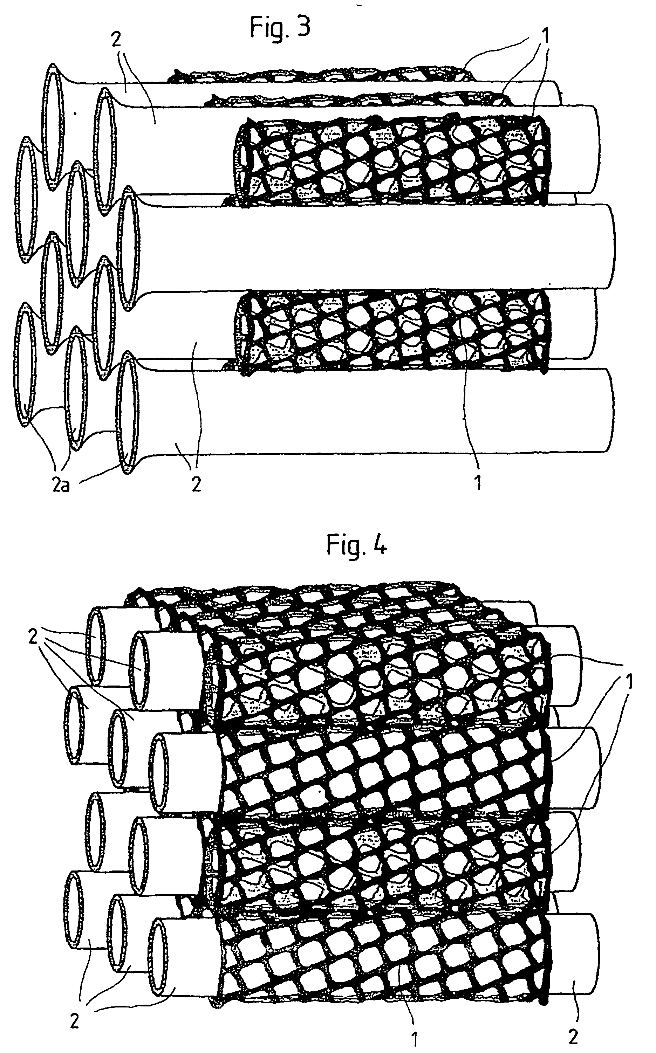

Bei der zweiten Abwandlung des ersten Ausführungsbeispiels nach Fig. 3 sind die vollwandigen Rohre 2 an ihrem einströmseitigen Ende mit einer trichterförmigen Erweiterung 2a versehen. Durch diese trichterförmige Erweiterung 2a wird verhindert, daß zu kühlende Flüssigkeit in Längsrichtung der vollwandigen Rohre 2 bis in deren Eintrittsöffnung läuft. Außerdem werden die Einströmverhältnisse für das Kühlgas in die vollwandigen Rohre 2 verbessert.

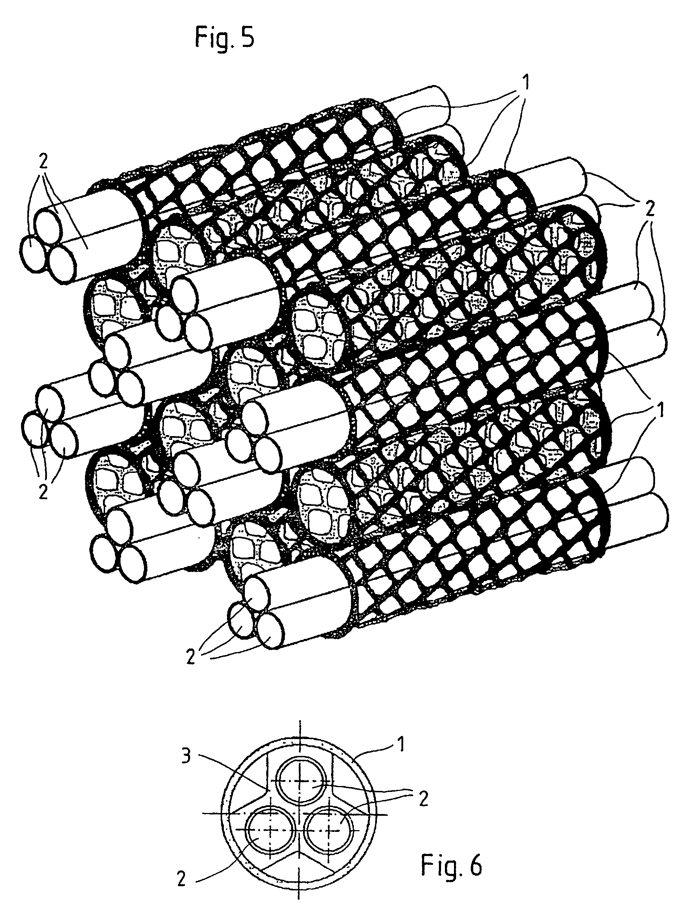

Während beim ersten Ausführungsbeispiel die vollwandigen Rohre 2 abwechselnd zu den Gitterrohren 1 innerhalb des Einbauelements angeordnet sind, zeigen das zweite und dritte Ausführungsbeispiel gemäß den Fig. 4 bis 7 eine Anordnung der vollwandigen Rohre 2 innerhalb der Gitterrohre 1, die somit den kompletten Grundkörper für das Einbauelement bilden.

Beim zweiten Ausführungsbeispiel nach Fig. 4 ist in jedem zweiten Gitterrohr 1 ein vollwandiges Rohr 2 angeordnet, das mit seinen Enden beidseitig über das Gitterrohr 1 hinausragt. Hierdurch entspricht das Verhältnis der Strömungsquerschnitte einerseits für den direkten und andererseits für den indirekten Wärmeaustausch dem Verhältnis des ersten Ausführungsbeispiels nach Fig. 1. Durch die in den Gitterrohren 1 angeordneten vollwandigen Rohre 2 wird jedoch einerseits die Oberfläche für den direkten Stoff- und Wärmeaustausch vergrößert und gleichzeitig der Wärmeübergang zwischen zu kühlender Flüssigkeit und den vollwandigen Rohren 2 verbessert, da die im Kontakt mit den vollwandigen Rohren 2 befindlichen Gitterrohre 1 Wärme aus der zu kühlenden Flüssigkeit in das Material der vollwandigen Rohre 2 einleiten.

Während die Querschnittsabmessungen der vollwandigen Rohre 2 bei der Ausführungsform nach Fig. 4 im wesentlichen denen der Gitterrohre 1 entsprechen, zeigt das dritte Ausführungsbeispiel nach Fig. 5 die Verwendung von vollwandigen Rohren 2 mit erheblich kleinerem Querschnitt als die Gitterrohre 1. Beim Aüsführungsbeispiel können auf diese Weise drei vollwandige Rohre 2 in einem Gitterrohr 1 angeordnet werden. Diese drei vollwandigen Rohre 2 füllen den Querschnitt des jeweiligen Gitterrohres 1 aus. Außerdem ragen die vollwandigen Rohre 2 wiederum mit beiden Enden aus den Gitterrohren 1 heraus.

Die in Fig. 6 anhand eines Querschnittes durch ein Gitterrohr 1 dargestellte Abwandlung der Ausführungsform nach Fig. 5 zeigt wiederum die Anordnung von drei vollwandigen Rohren 2 innerhalb eines Gitterrohres 1. Die vollwandigen Rohre 2 haben jedoch einen derart kleinen Querschnitt, daß sie mittels Abstandshaltern 3 im Inneren des Gitterrohres 1 festgelegt werden.

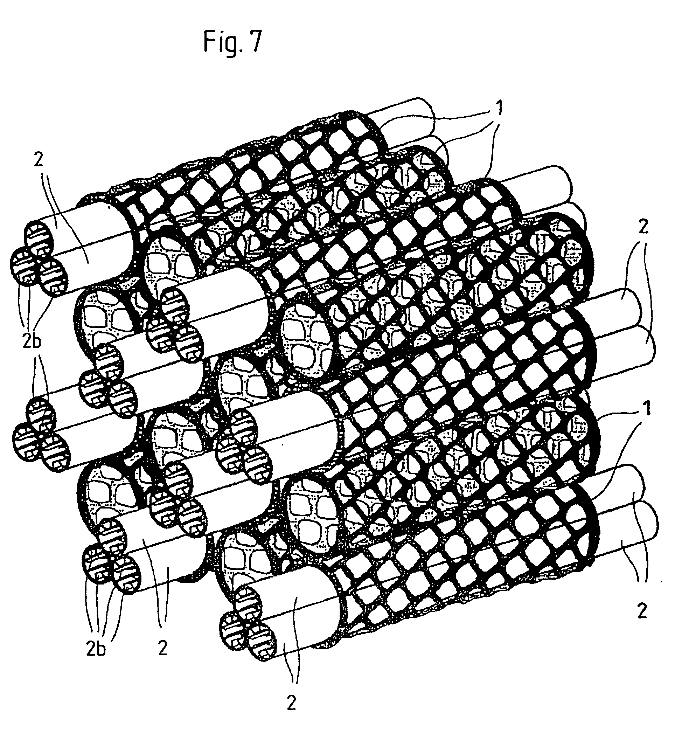

Die in Fig. 7 dargestellte weitere Abwandlung der Ausführungsform nach Fig. 5 zeigt vollwandige Rohre 2, die im Inneren mit axial verlaufenden Rippen 2b versehen sind, durch welche die Wärmeaustauschfläche der vollwandigen Rohre 2 vergrößert wird.

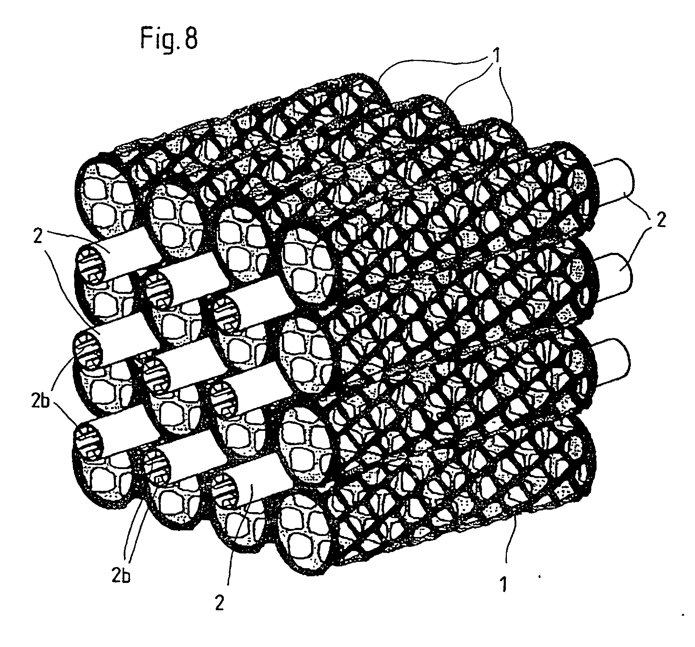

Derartige, mit innenliegenden Rippen 2b versehene vollwandige Rohre 2 werden auch beim vierten Ausführungsbeispiel nach Fig. 8 verwendet. Bei dieser Ausführungsform liegen die vollwandigen Rohre 2 jedoch nicht innerhalb der Gitterrohre 1, sondern in den zwischen jeweils vier Gitterrohren 1 gebildeten Zwischenräumen des Einbauelements. Der Durchmesser der vollwandigen Rohre 2 ist auf diesen Zwischenraum abgestimmt, so daß auch bei dieser Ausführungsform die vollwandigen Rohre 2 an den benachbarten Gitterrohren 1 anliegen.

Die beiden Ausführungsbeispiele nach den Fig. 9 und 10 zeigen schematisch einen Kühlturm in zwei rechtwinklig zueinander verlaufenden senkrechten Schnittdarstellungen. Beide Darstellungen zeigen dasselbe Einbauelement, das jedoch unterhalb mit unterschiedlichen Einrichtungen zur Abführung des aus den Gitterrohren 1 herabtropfenden Wassers versehen ist.

Wie die Fig. 9 und 10 erkennen lassen, besitzt der Kühlturm ein Kühlturmgehäuse 4 mit quadratischem Grundriß, auf dessen Oberseite ein Diffusor 5 für einen nicht dargestellten Ventilator angeordnet ist. Die Kühlluft tritt gemäß Fig. 9 an zwei gegenüberliegenden Seiten des Kühlturmgehäuses 4 ein und durchströmt das Kühlturmgehäuse 4 von unten nach oben. Im unteren Teil des Kühlturmgehäuses 4 ist eine Wassertasse 6 zum Auffangen des gekühlten Wassers ausgebildet.

Das in den Fig. 9 und 10 dargestellte Einbauelement wird durch etwa senkrecht stehende Rohre gebildet, die sich wiederum aus Gitterrohren 1 und vollwandigen Rohren 2 zusammensetzen. Das zu kühlende Wasser wird den Gitterrohren 1 von oben her durch Verteilleitungen 7 aufgegeben, die an der Unterseite mit Sprühdüsen 7a versehen sind, so daß die gesamte Oberfläche der senkrecht stehenden Gitterrohre 1 mit der zu kühlenden Flüssigkeit besprüht wird. Oberhalb der Sprühdüsen 7a ist ein Tropfenfang 8 angeordnet.

Damit die zu kühlende Flüssigkeit nicht in die für den indirekten, trockenen Wärmeaustausch vorgesehenen vollwandigen Rohre 2 eintreten kann, ragen diese mit ihrem oberen Ende durch die Flüssigkeitsverteileinrichtung heraus. Auch die unteren Enden der vollwandigen Rohre 2, in die die seitlich in das Kühlturmgehäuse 4 eintretende Kühlluft gemäß den Pfeilen nach Fig. 9 eintritt, überragen die Gitterrohre 1 nach unten. Diese eintrittsseitigen Enden der vollwandigen Rohre 2 sind in Richtung auf die Kühllufteintrittsöffnungen des Kühlturmgehäuses 4 abgeschrägt, wie insbesondere Fig. 9 erkennen läßt. Außerdem sind die Enden der vollwandigen Rohre 2 über den Kühlturmquerschnitt gestaffelt, um sowohl den Kühllufteintritt als auch die Abführung der aus den vollwandigen Rohren 2 austretenden erwärmten Kühlluft zu verbessern.

Um zu verhindern, daß von den Gitterrohren 1 abtropfendes Wasser mit der Kühlluft in das untere Ende der vollwandigen Rohre 2 gelangt, sind bei der ersten Ausführungsform nach Fig. 9 unterhalb der Gitterrohre 1 Sammelrinnen 9 angeordnet, die in Fig. 9 im Querschnitt zu sehen sind und die das Wasser zu einer oder zu beiden Seiten des Kühlturmgehäuses 4 führen, so daß es nicht im Eintrittsbereich der Luft in die Wassertasse 6 abtropft.

Bei der Ausführungsvariante nach Fig. 10 sind im unteren Teil des Kühlturmgehäuses 4 parallel zueinander stehende Abtropfbleche 10 angeordnet, deren unterer Rand stufen- oder wellenförmig ausgeführt ist, so daß sich das an den Abtropfblechen 10 herabrieselnde Wasser an vorgegebenen Stellen außerhalb des Kühllufteintrittsbereiches der vollwandigen Rohre 2 sammelt. Auch auf diese Weise wird vermieden, daß Wasser mit der Kühlluft in den Eintrittsbereich der vollwandigen Rohre 2 gelangt.

Auch bei den Ausführungen nach den Fig. 9 und 10 mit stehend angeordneten Gitterrohren 1 und vollwandigen Rohren 2 findet außer dem direkten Stoff- und Wärmeaustausch zwischen dem im Bereich der Gitterrohre 1 strähnen- und tropfenförmig herabfallendem Wasser und der von unten nach oben das Kühlturmgehäuse 4 durchströmenden Kühlluft ein indirekter Wärmeaustausch bezüglich desjenigen Teils der Kühlluft statt, welche die vollwandigen Rohre 2 von unten nach oben, und zwar ebenfalls im Gegenstrom zum Wasser, durchströmt und nicht in Berührung mit dem zu kühlenden Wasser gelangt. Die aus den Gitterrohren 1 austretende, mit Feuchtigkeit beladene Kühlluft vermischt sich mit der trockenen und erwärmten Kühlluft, die oben aus den vollwandigen Rohren 2 austritt, so daß eine Schwadenbildung im Diffusor 5 des Kühlturms verhindert wird, weil hier die vermischte Kühlluft insgesamt unterhalb der Sättigungsgrenze liegt.

### Bezugszeichenliste

- 1: Gitterrohr
- 2: vollwandiges Rohr
- 2a: trichterförmige Erweiterung
- 2b: Rippe
- 3: Abstandshalter
- 4: Kühlturmgehäuse
- 5: Diffusor
- 6: Wassertasse
- 7: Verteilleitung
- 7a: Sprühdüse
- 8: Tropfenfang
- 9: Sammelrinne
- 10: Abtropfblech

## Patentansprüche

1. Einbauelement für Kühlwerke, dem zu kühlende Flüssigkeit von oben aufgegeben und das im Kreuz- und/oder Gegenstrom mit Kühlgas, vorzugsweise Luft beaufschlagt wird, wobei eine Mehrzahl von zueinander parallelen Kanälen vorgesehen ist, die insgesamt von Kühlgas durchströmt werden und von denen ein Teil zwecks direktem Stoff- und Wärmeaustausch mit der zu kühlenden Flüssigkeit und der andere Teil zwecks indirektem Wärmeaustausch ausschließlich mit Kühfgas beaufschlagt wird, wobei die für den indirekten Wärmeaustausch vorgesehenen Kanäle durch vollwandige Rohre (2) gebildet sind,
**dadurch gekennzeichnet,**
**daß** die für den direkten Stoff- und Wärmeaustausch vorgesehenen Kanäle durch Gitterrohre (1) gebildet sind, die parallel zu den vollwandigen Rohren (2) angeordnet sind.

2. Einbauelement nach Anspruch 1, **dadurch gekennzeichnet, daß** die vollwandigen Rohre (2) zwischen den Gitterrohren (1) und/oder innerhalb der Gitterrohre (1) angeordnet sind.

3. Einbauelement nach Anspruch 1 oder 2, **dadurch gekennzeichnet, daß** die vollwandigen Rohre (2) dieselben oder kleinere Querschnittsabmessungen als die Gitterrohre (1) haben.

4. Einbauelement nach Anspruch 3, **dadurch gekennzeichnet, daß** mehrere vollwandige Rohre (2) innerhalb eines Gitterrohres (1) angeordnet sind.

5. Einbauelement nach einem der Ansprüche 1 bis 4, **dadurch gekennzeichnet, daß** die Gitterrohre (1) und/oder die vollwandigen Rohre (2) einen kreisförmigen, ovalen oder polygonalen Querschnitt haben.

6. Einbauelement nach mindestens einem der Ansprüche 1 bis 5, **dadurch gekennzeichnet, daß** die vollwandigen Rohre (2) auf der Innen- und/oder Außenseite mit die Rohroberfläche vergrößernden Rippen (2b) oder Noppen versehen sind.

7. Einbauelement nach mindestens einem der Ansprüche 1 bis 6, **dadurch gekennzeichnet, daß** die vollwandigen Rohre (2) länger als die Gitterrohre (1) ausgebildet sind und mindestens mit einem Ende die Gitterrohre (1) überragen.

8. Einbauelement nach Anspruch 7, **dadurch gekennzeichnet, daß** die die Gitterrohre (1) überragenden Enden der vollwandigen Rohre (2) als Auflager oder Abstützung für das Einbauelement dienen.

9. Einbauelement nach Anspruch 7, **dadurch gekennzeichnet, daß** die vollwandigen Rohre (2) an ihrem einströmseitigen Ende mit einer trichterförmigen Erweiterung (2a) und/oder einer Abschrägung versehen sind.

10. Einbauelement nach Anspruch 7, **dadurch gekennzeichnet, daß** die Gitterrohre überragenden Enden der vollwandigen Rohre (2) mit einem radial von der Rohrmantelfläche abstehenden Kragen versehen sind.

11. Einbauelement nach mindestens einem der Ansprüche 1 - 10, **dadurch gekennzeichnet, daß** die Gitterrohre (1) und vollwandigen Rohre (2) etwa waagerecht liegend angeordnet sind.

12. Einbauelement nach mindestens einem der Ansprüche 1 bis 10, **dadurch gekennzeichnet, daß** die Gitterrohre (1) und die vollwandigen Rohre (2) etwa senkrecht stehend angeordnet sind.

13. Einbauelement nach Anspruch 1 und 12 mit etwa senkrecht stehend angeordneten Rohren (1, 2) und einer oberhalb der Rohre (1, 2) angeordneten Flüssigkeitsverteileinrichtung (7, 7a), wobei die vollwandigen Rohre (2) mit ihrem oben liegenden Austrittsende die Flüssigkeitsverteilrichtung (7, 7a) überragen und mit ihrem unten liegenden Eintrittsende bis in den Bereich des seitlichen Kühlgaseintrittes herausragen, **dadurch gekennzeichnet, daß** unterhalb der Gitterrohre (1) und oberhalb der unteren Enden der vollwandigen Rohre (2) Sammelrinnen (9) oder Abtropfbleche (10) zum Auffangen der Flüssigkeit angeordnet sind.

## Claims

1. Packing element for cooling plant, to which liquid for cooling is delivered from above and which is acted upon by cooling gas, preferably air, in crossflow and/or counterflow, wherein a plurality of parallel ducts are provided, through all of which ducts cooling gas flows, some of which are acted upon by the liquid for cooling for the purpose of direct substance and heat exchange and the remainder of which are acted upon solely by cooling gas for the purpose of indirect heat exchange, wherein the ducts provided for the indirect heat exchange are formed by solid tubes (2),
**characterised in that** the ducts provided for the direct substance and heat exchange are formed by latticed tubes (1), which are disposed parallel to the solid tubes (2).

2. Packing element according to Claim 1, **characterised in that** the solid tubes (2) are disposed between the latticed tubes (1) and/or inside the latticed tubes (1).

3. Packing element according to Claim 1 or 2, **characterised in that** the solid tubes (2) have the same or smaller cross-sectional dimensions as/than the latticed tubes (1).

4. Packing element according to Claim 3, **characterised in that** a plurality of solid tubes (2) are disposed inside a latticed tube (1).

5. Packing element according to any one of Claims 1 to 4, **characterised in that** the latticed tubes (1) and/or the solid tubes (2) have a circular, an oval or a polygonal cross section.

6. Packing element according to at least one of Claims 1 to 5, **characterised in that** the solid tubes (2) are provided on the inside and/or outside with ribs (2b) or protuberances which enlarge the tube surface.

7. Packing element according to at least one of Claims 1 to 6, **characterised in that** the solid tubes (2) are longer than the latticed tubes (1) and project beyond the latticed tubes (1) at least with one end.

8. Packing element according to Claim 7, **characterised in that** the ends of the solid tubes (2) which project beyond the latticed tubes (1) serve as a bearing or support for the packing element.

9. Packing element according to Claim 7, **characterised in that** the solid tubes (2) are provided at their inflow end with a funnel-shaped widening (2a) and/or a bevel.

10. Packing element according to Claim 7, **characterised in that** the ends of the solid tubes (2) which project beyond the latticed tubes are provided with a collar which protrudes radially from the tube surface shell.

11. Packing element according to at least one of Claims 1 - 10, **characterised in that** the latticed tubes (1) and the solid tubes (2) are disposed approximately horizontally.

12. Packing element according to at least one of Claims 1 to 10, **characterised in that** the latticed tubes (1) and the solid tubes (2) are disposed approximately vertically.

13. Packing element according to Claims 1 and 12 with approximately vertically disposed tubes (1, 2) and a liquid distribution device (7, 7a) disposed above the tubes (1, 2), wherein the solid tubes (2) project beyond the liquid distribution device (7, 7a) with their upper outlet end and into the region of the lateral cooling gas inlet with their lower inlet end, **characterised in that** collecting channels (9) or drip pans (10) for collecting the liquid are disposed below the latticed tubes (1) and above the lower ends of the solid tubes (2).

## Revendications

1. Elément d'insert pour tours de refroidissement auquel du liquide à refroidir est amené à partir du haut, et qui est alimenté en gaz de refroidissement, de préférence de l'air, à courant croisé et/ou à contre-courant, une pluralité de canaux parallèles les uns par rapport aux autres étant prévue, qui sont tous traversés par du gaz de refroidissement, et dont une partie est alimentée par le liquide à refroidir dans le but d'un échange thermique et de matière direct, alors que l'autre partie est exclusivement alimentée par du gaz de refroidissement dans le but d'un échange thermique indirect, les canaux prévus pour l'échange thermique indirect étant constitués de tubes à paroi pleine (2),
**caractérisé en ce que**
les canaux prévus pour l'échange thermique et de matière direct sont constitués de tubes en treillis (1), qui sont disposés parallèlement aux tubes à paroi pleine (2).

2. Elément d'insert selon la revendication 1, **caractérisé en ce que** les tubes à paroi pleine (2) sont disposés entre les tubes en treillis (1) et/ou à l'intérieur des tubes en treillis (1).

3. Elément d'insert selon la revendication 1 ou 2, **caractérisé en ce que** les tubes à paroi pleine (2) ont les mêmes dimensions ou des dimensions plus petites en section transversale que les tubes en treillis (1).

4. Elément d'insert selon la revendication 3, **caractérisé en ce que** plusieurs tubes à paroi pleine (2) sont disposés à l'intérieur d'un tube en treillis (1).

5. Elément d'insert selon l'une quelconque des revendications 1 à 4, **caractérisé en ce que** les tubes en treillis (1) et/ou les tubes à paroi pleine (2) ont une section transversale circulaire, ovale ou polygonale.

6. Elément d'insert selon l'une au moins des revendications 1 à 5, **caractérisé en ce que** la face intérieure et/ou la face extérieure des tubes à paroi pleine (2) sont munies de cannelures (2b) ou de nervures agrandissant la surface de tube.

7. Elément d'insert selon l'une au moins des revendications 1 à 6, **caractérisé en ce que** les tubes à paroi pleine (2) sont agencés avec une longueur supérieure à celle des tubes en treillis (1), et dépassent des tubes en treillis (1) par l'une au moins de leurs extrémités.

8. Elément d'insert selon la revendication 7, **caractérisé en ce que** les extrémités des tubes à paroi pleine (2) dépassant des tubes en treillis (1) servent d'appui ou de support pour l'élément d'insert.

9. Elément d'insert selon la revendication 7, **caractérisé en ce que** les tubes à paroi pleine (2) comportent du côté de leur extrémité d'admission un élargissement (2a) en forme d'entonnoir et/ou un chanfrein.

10. Elément d'insert selon la revendication 7, **caractérisé en ce que** les extrémités des tubes à paroi pleine (2) dépassant des tubes en treillis sont munies d'une collerette faisant radialement saillie de la surface d'enveloppe des tubes.

11. Elément d'insert selon l'une au moins des revendications 1 à 10, **caractérisé en ce que** les tubes en treillis (1) et les tubes à paroi pleine (2) sont disposés en étant positionnés sensiblement à l'horizontale.

12. Elément d'insert selon l'une au moins des revendications 1 à 10, **caractérisé en ce que** les tubes en treillis (1) et les tubes à paroi pleine (2) sont disposés en étant positionnés debout sensiblement à la verticale.

13. Elément d'insert selon les revendications 1 et 12, comportant des tubes (1, 2) disposés en étant positionnés debout sensiblement à la verticale, et un dispositif de répartition (7, 7a) de liquide disposé au-dessus des tubes (1, 2), les tubes à paroi pleine (2) dépassant au-dessus du dispositif de répartition (7, 7a) de liquide par leur extrémité de sortie située en partie supérieure, et arrivant par leur extrémité d'entrée située en partie inférieure jusque dans la zone de l'entrée latérale de gaz de refroidissement, **caractérisé en ce que** des collecteurs (9) ou des tôles d'égouttage (10) pour la récupération du liquide sont disposés sous les tubes en treillis (1) et au-dessus des extrémités inférieures des tubes à paroi pleine (2).
